# FASCICULE DE BREVET EUROPEEN

(11) **EP 4 458 654 B1**
(45) Date de publication et mention de la délivrance du brevet: **01.07.2026**
(21) Numéro de dépôt: 23171889.1
(22) Date de dépôt: 05.05.2023
(51) Int. Cl.: B62H 3/08, B62H 5/00

(54) **DISPOSITIF ANTIVOL POUR CYCLE ET PROCÉDÉ DE COINCEMENT**
DIEBSTAHLSICHERUNGSVORRICHTUNG FÜR FAHRRAD UND KLEMMVERFAHREN
ANTI-THEFT DEVICE FOR A CYCLE AND CLAMPING METHOD

(43) Date de publication de la demande: 06.11.2024
(73) Titulaire: Gasparini, 73130 Saint-Avre (FR)
(72) Inventeur: GASPARINI, Michel, 73130 SAINT-AVRE (FR)
(74) Mandataire: Talbot, Alexandre

(56) Documents cités:
- EP-B1- 0 806 339
- WO-A1-2016/135685
- WO-A1-2019/038644
- KR-B1- 100 955 059
- US-A- 4 126 228

## Description

### Domaine technique

L'invention est relative à un dispositif antivol pour cycle et à un procédé de coincement d'un cycle dans un tel dispositif antivol.

### Technique antérieure

Il existe un intérêt reconnu à se déplacer au moyen d'un cycle à la place d'un véhicule à combustion de manière à réduire la pollution issue de la dégradation du carburant et à éviter la congestion des voies de circulation. Cependant, un des principaux freins à l'utilisation d'un cycle réside dans le vol et la dégradation de ce dernier lorsqu'il est stationné.

De manière classique, un utilisateur accroche son cycle à un point d'ancrage fixe qui peut être un équipement dédié à cette utilisation ou un mobilier urbain. Le cycle est accroché au moyen d'un antivol mobile que l'utilisateur transporte avec lui et qui est un anneau ouvrable. Selon l'ouverture offerte par l'antivol mobile et la configuration du point d'ancrage, l'utilisateur accroche le cadre et éventuellement une roue. Cette solution n'est pas très pratique car elle impose d'emmener l'antivol mobile qui possède un poids certains et dont l'efficacité dépend très fortement de la configuration du lieu de stationnement.

Afin de faciliter la vie des usagés, il est proposé de fournir des équipements fixes, c'est-à-dire des équipements fixés au sol et très difficilement déplaçables dont la conformation est adaptée à rendre le vol d'un cycle plus difficile. Il est possible de citer le document EP 1712456 qui divulgue un dispositif antivol de parking pour vélo possédant un bâti fixé au sol. Le bâti définit un support de forme courbe terminée par un « U » horizontal afin de limiter les déplacements des roues selon l'axe longitudinal du vélo et selon l'axe transversal du vélo. Le bâti possède une coiffe fixée au support et destinée à recevoir la selle du vélo pour limiter un déplacement du cadre selon la direction verticale. Il apparait que cette solution est intéressante mais difficilement industrialisable et utilisable au quotidien car elle présuppose que les vélos ont tous le même encombrement. Force est de reconnaitre que la montée en puissance des vélos électriques a vu l'apparition de configurations très disparates de vélos avec des cintres plus longs et souvent plus haut et supportant nombre d'équipements électroniques.

Il y a donc un intérêt à rechercher une configuration plus facilement adaptable aux différentes formes de cycles sans pour autant réduire la capacité à assurer une bonne protection contre le vol.

Le document WO2016/147037 divulgue un dispositif antivol de parking pour cycle muni d'une structure fixe définissant une rainure destinée à recevoir et bloquer la roue avant du cycle. La structure fixe forme une butée empêchant la progression du vélo dans le sens de la marche avant et contraignant un déplacement de la roue avant selon la direction transversale. Le dispositif antivol possède également une planche pivotante destinée à venir en appui contre la selle. Là encore, il convient de constater que cette configuration ne semble pas répondre aux problématiques actuelles. Afin de réduire le risque de vol, il est nécessaire d'utiliser deux antivols mobiles afin de sécuriser indépendamment la roue avant et la roue arrière en association avec le cadre. L'utilisation de deux antivols mobiles rend cette configuration inexploitable.

Une configuration intéressante d'antivol de parking pour cycle est présentée dans le document KR 10-0955059 qui divulgue un antivol définissant un rail recevant les deux roues du vélo. Les montants du rail sont destinés à empêcher un déplacement transversal des roues pour limiter un déplacement du cadre et du reste du vélo. L'antivol possède également une fourchette montée à l'extrémité d'un bras mobile et qui est destinée à enchâsser une partie du cadre entre le guidon et la selle. Le montage de la fourchette au bout du bras représentant une configuration mécanique peut résistante, la fourchette possède des pions qui s'introduisent dans une seconde rainure afin d'assurer une meilleure tenue mécanique et bloquer le déplacement du bras dans le sens visant à libérer le cycle. La solution proposée semble inadaptée à la forme d'un vélo dit « hollandais » qui ne possède qu'un seul tube reliant la partie avant du vélo à la partie arrière. En outre, pour assurer une protection efficace, il est important de limiter le jeu selon la direction transverse entre les bords de la fourchette et le cadre. Or pour avoir une bonne adaptation aux différents vélos, il est important que la fourchette soit large pour accepter les batteries des vélos électriques. Ses deux objectifs sont antagonistes. Le document KR 100 955 059 divulgue les caractéristiques du préambule de la revendication 1.

Le document KR10-1471783 divulgue un antivol de parking pour cycle qui comporte une platine destinée à recevoir les roues du cycle. L'antivol possède une rainure destinée à recevoir la roue avant pour limiter son mouvement transversal. La platine possède deux bloqueurs qui sont destinés à limiter le mouvement de la roue arrière selon la direction transversale. L'antivol possède également une planche montée mobile à pivotement pour venir en appui contre la selle. La planche est courbée à son extrémité pour empêcher le recul du cycle au-delà d'une position seuil. Cette configuration présuppose une forme et un encombrement sensiblement équivalent entre les vélos. Le système de blocage de la roue arrière définit la longueur du vélo tandis que la longueur de blocage de la selle implique un encombrement standardisé.

Il est également connu le document EP331531 qui divulgue un antivol de parking pour cycle muni d'une platine posée au sol et destinée à recevoir les roues du cycle. Une butée de blocage longitudinale s'étend depuis la platine pour bloquer un déplacement du cycle dans l'antivol selon une première direction. L'antivol comporte également un moyen de blocage vertical sous la forme d'un bras pivotant muni d'un moyen de blocage de selle destiné à empêcher un déplacement transversal de la selle. La roue arrière est bloquée dans l'antivol par deux bordures latérales. Le bras pivotant est fixé en position au moyen d'un chaine qui relie l'extrémité mobile du bras avec la platine. De manière avantageuse, la chaine passe à travers de la roue avant du vélo pour mieux assurer la protection contre le vol.

### Objet de l'invention

Un objet de l'invention consiste à prévoir un antivol de parking à cycle qui est facile à utiliser et qui s'adapte mieux aux différentes configurations de cycles. A cet effet, le dispositif antivol de parking pour un cycle comprend au moins des roues avant et arrière, un cadre, une selle et une paire de pédales. Le dispositif antivol de parking à cycle comporte un bâti destiné à être fixé à un ancrage. Le bâti définit un logement destiné à recevoir le cycle, le bâti possédant :
- un rail s'étendant selon une direction longitudinale et possédant une zone de roulement destinée à supporter les roues avant et arrière du cycle, le rail comportant au moins deux bordures montées en saillie de la zone de roulement pour limiter un déplacement des roues avant et arrière hors de la zone de roulement selon une direction transversale perpendiculaire à la direction longitudinale ;
- une butée de fin de course montée à une extrémité du rail et destinée à bloquer une progression du cycle le long du rail selon la direction longitudinale ;
- un bras monté mobile par rapport au rail pour se rapprocher ou s'éloigner du rail selon une direction verticale, dans une position de blocage le bras s'étend principalement selon la direction longitudinale et est en vis-à-vis du rail selon la direction verticale, la position de blocage étant destinée à bloquer un déplacement vertical du cycle disposé entre le rail et le bras ;
- une platine de blocage ;
- une tige destinée à être fixée d'une part à une extrémité mobile du bras et d'autre part à la platine de blocage pour imposer un écartement entre le rail et le bras et maintenir le bras dans la position de blocage.

Le dispositif antivol de parking pour un cycle est remarquable en ce que la platine de blocage définit au moins un trou de blocage qui est traversant et apte à être traversé par une des pédales lorsque le cycle est posé sur la zone de roulement, le au moins un trou de blocage formant une butée destinée à empêcher au moins un déplacement vertical du cycle.

Selon un mode de réalisation, la platine de blocage est montée mobile à pivotement autour d'un arbre de pivotement s'étendant selon la direction longitudinale, la fixation de la platine de blocage à la tige empêchant le pivotement de la platine de blocage.

Avantageusement, le au moins un trou de blocage est courbe de manière concave dans une observation depuis la butée.

Dans un développement, la platine de blocage définit une pluralité de trous traversants ou une pluralité de pions destinée à coopérer avec la tige pour définir plusieurs valeurs d'écartement entre le rail et le bras.

Préférentiellement, le bras possède une première partie montée mobile par rapport à une deuxième partie pour ajuster la longueur du bras selon la direction longitudinale, la tige étant fixée à la première partie. Un ressort est fixé à la première partie, le ressort étant destiné à prendre appui sur une potence du cycle pour éviter un contact direct entre la première partie et le cycle.

Dans un mode de réalisation particulier, un tube est fixé à la première partie autour du ressort. Le tube définit au moins une échancrure destinée au passage d'un tube de potence ou d'un cintre du cycle.

L'invention a également pour objet un procédé de coincement d'un cycle dans un antivol de parking qui est facile à mettre en œuvre et qui coince efficacement des cycles ayant des tailles et formes différentes.

On tend à atteindre ce résultat au moyen d'un procédé de coincement d'un cycle comportant les étapes suivantes :
- fournir un antivol de parking pour cycle selon l'une quelconque des configurations précédentes ;
- installer le cycle sur la zone de roulement d'un rail, la roue arrière étant en appui contre une butée de fin de course selon la direction longitudinale, les roues avant et arrière du cycle étant disposées entre des bordures bloquant un déplacement des roues avant et arrière selon une direction transversale perpendiculaire à la direction longitudinale ;
- installer une pédale du cycle dans un trou de blocage de la platine de blocage pour bloquer un déplacement du cycle selon la direction verticale et selon la direction longitudinale ;
- ajuster l'inclinaison du bras pour empêcher un déplacement vertical du cycle de sorte que les roues avant et arrière soient toujours entre les bordures ;
- accrocher la tige à la platine de blocage, la tige étant fixée au bras de manière à fixer l'écartement entre le bras et le rail.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre, de manière schématique, une vue transversale d'un dispositif antivol selon l'invention ;
- la figure 2 illustre, de manière schématique, une vue en coupe de la partie inferieure d'un dispositif antivol selon l'invention ;
- la figure 3 illustre, de manière schématique, une vue en coupe de la partie inferieure d'un dispositif antivol d'un autre mode de réalisation selon l'invention, avec un autre mode de réalisation d'un tube recevant un ressort.

### Description des modes de réalisation

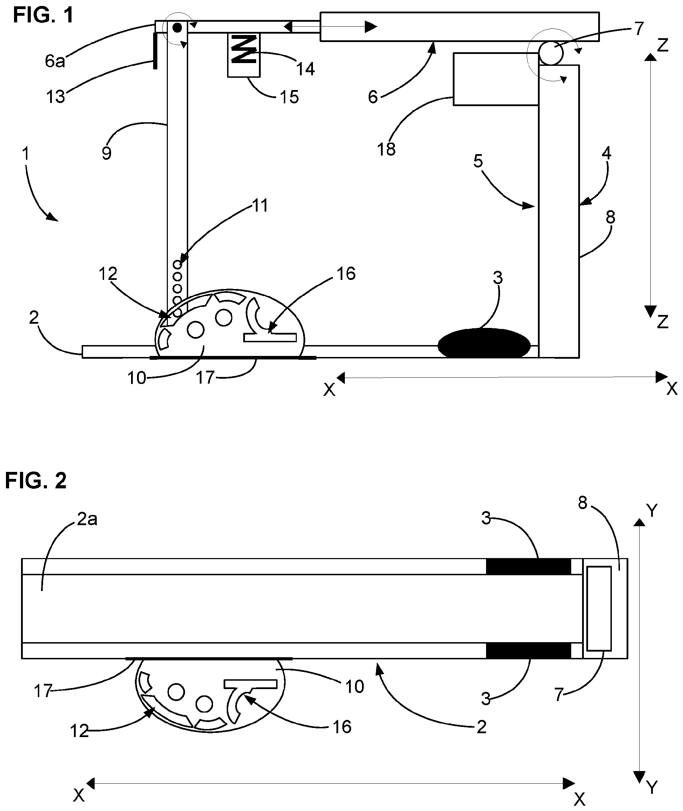

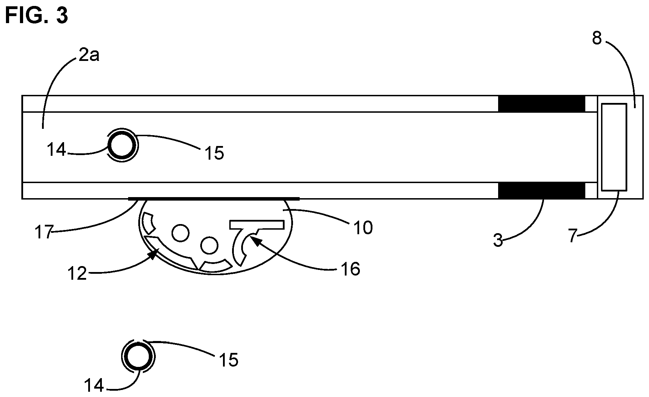

Les figures 1 à 3 illustrent un dispositif antivol de parking pour cycle. Le dispositif antivol possède un bâti 1 qui est destiné à être fixé au sol. Le bâti 1 peut être scellé au sol par tout moyen adapté de manière à le rendre difficilement amovible du sol et ainsi dissuader d'emporter le bâti 1 avec le cycle.

Afin de rendre le vol d'un cycle le plus difficile possible, il est important de limiter autant que possible les déplacements du cycle par rapport au bâti 1. Il y a donc un intérêt à prévoir une configuration de bâti 1 qui assure une bonne adaptation aux différentes formes de cycles tout en assurant un blocage efficace. On cherche à bloquer un déplacement selon une direction longitudinale XX, selon une direction transversale YY perpendiculaire à la direction longitudinale et selon une direction verticale ZZ perpendiculaire aux deux précédentes. On cherche à empêcher des translations et des pivotements du vélo par rapport à l'antivol.

Le bâti 1 est destiné à former un anneau autour du cycle dans une observation selon la direction transversale, comme cela est illustré à la figure 1. Le bâti 1 possèdent deux parois qui s'étendent principalement de manière sensiblement horizontale et qui sont destinées à limiter les mouvements verticaux entre le cycle et l'antivol. Préférentiellement, le vélo est au contact de chacune de ces deux parois. Le bâti 1 possèdent deux parois additionnelles qui s'étendent principalement de manière sensiblement verticale qui sont destinées à limiter les mouvements longitudinaux entre le cycle et l'antivol. Préférentiellement, le vélo est au contact de chacune de ces deux parois additionnelles. La direction longitudinale XX est la direction principale d'une zone de roulement de l'antivol et la direction d'un déplacement en avant ou un arrière du cycle.

Le bâti 1 possède également d'autres équipements destinés à limiter les déplacements transversaux entre le cycle et le bâti 1. La direction transversale étant perpendiculaire aux deux directions précédentes.

Le bâti 1 possède un rail 2 avec une zone de roulement 2a destinée à recevoir la roue avant et la roue arrière du cycle. De manière avantageuse, le rail 2 est posé directement contre le sol afin de faciliter l'installation du cycle en le faisant rouler le long de la zone de roulement 2a. Préférentiellement, le rail 2 est fixé directement au sol ou à un point d'ancrage. Le rail 2 s'étend selon une direction longitudinale XX et le cycle circule le long de la direction longitudinale XX dans le rail 2. Le rail 2 comporte au moins deux bordures 3 montées en saillie de la zone de roulement 2a pour limiter un déplacement des roues avant et arrière hors de la zone de roulement 2a selon une direction transversale YY perpendiculaire à la direction longitudinale XX. La distance de séparation entre les deux bordures 3 impose la largeur maximale des pneus acceptés. La hauteur des bordures 3 est adaptée pour venir en vis-à-vis des jantes et de préférence en vis-à-vis des rayons pour éviter de faciliter un déplacement du cycle après avoir dégonflé les pneus. Les deux bordures 3 permettent de limiter l'amplitude des embardées imposées au cycle. Les deux bordures 3 servent à maintenir le cycle en position lors du réglage de l'antivol.

Le bâti 1 possède une butée 4 qui est une butée de fin de course destinée à bloquer une progression du cycle de préférence une des roues avant ou arrière le long du rail 2 selon la direction longitudinale XX. La butée 4 forme tout ou partie de la paroi de fond de la forme en « U ». La butée 4 bloque la progression du cycle à l'intérieur du bâti 1 lorsque le cycle atteint une position seuil. La butée 4 permet de définir un position terminale commune pour tous les vélos indépendamment de leur taille.

Afin de limiter le roulis appliqué sur cycle, c'est-à-dire un pivotement autour d'un axe s'étendant selon la direction longitudinale XX et qui représente préférentiellement les points de contact entre les roues et la zone de roulement 2a, il est avantageux de prévoir que le bâti 1 possède des bordures additionnelles 5 qui s'étendent selon la direction verticale ZZ. Préférentiellement, les bordures additionnelles 5 s'étendent depuis la butée 4. Dans un mode de réalisation particulier, la butée 4 et les bordures additionnelles 5 définissent une rainure qui s'étend selon la direction ZZ et qui est destinée à recevoir une des roues. En installant la roue arrière dans la rainure, on peut fixer une position de référence selon la direction longitudinale XX et on limite le pivotement du cadre du cycle selon la direction transversale YY.

Afin de limiter les déplacements verticaux du cycle, le bâti 1 possède un bras 6 qui est disposé face au rail 2 selon la direction verticale ZZ. Le bras 6 est monté mobile par rapport au rail 2 afin de mieux s'adapter aux différentes formes de cycles. Le bras 6 se déplace pour s'éloigner ou se rapprocher du rail 2 et ainsi définir un écartement entre le rail 2 et le bras 6 qui assure une meilleure adaptation à la forme du cycle. Le bras 6 possède une première extrémité 6a qui est mobile pour se rapprocher ou s'éloigner du rail 2 selon la direction verticale ZZ.

Dans un mode de réalisation avantageux illustré à la figure 1, le bras 6 est monté mobile à pivotement autour d'un arbre de pivotement 7 qui est installé sur un poteau 8. L'arbre de pivotement 7 s'étend principalement ou exclusivement de manière horizontale et préférentiellement selon la direction transversale YY. De manière préférentielle, le poteau 8 forme la butée 4 et plus préférentiellement les bordures additionnelles 5. Lorsque le bras 6 est monté pivotant, il est avantageux que le bras 6 possède une position de rangement où l'extrémité mobile du bras est légèrement plus basse que l'arbre de pivotement. Cette configuration facilite l'installation du cycle et permet une meilleure adaptation aux cycles de petite taille.

Dans un mode de réalisation, le poteau 8 est à hauteur fixe, c'est-à-dire que l'arbre de pivotement 7 est à une hauteur fixe. Cette configuration permet de former un poteau résistant avec un coût réduit.

Préférentiellement, le bras 6 est un bras à longueur variable. La longueur du bras 6 représente la dimension selon la direction longitudinale XX lorsque le bras 6 est parallèle au rail 2, c'est-à-dire la dimension qui s'étend depuis l'arbre de pivotement 7. L'utilisation d'un bras 6 à longueur variable permet une meilleure adaptation à la longueur du cycle 6 depuis la butée de fin de course 4. En association avec le montage à pivotement, le bras 6 est en mesure de s'adapter plus facilement aux différentes formes et tailles de cycle.

Le bâti 1 possède un lien, de préférence une tige 9, qui est destiné à relier mécaniquement l'extrémité mobile 6a du bras 6 avec le rail 2 ou un autre équipement installé de manière fixe ou sensiblement fixe par rapport au rail 2. Le lien impose l'écartement maximal entre le bras 6 et le rail 2. Le lien définit également la longueur du bras 6. Le lien peut être un lien souple, par exemple un câble en acier ou une chaine, ou alors un lien rigide par exemple la tige 9. Le lien possède une première extrémité qui est fixée au bras 6 et une deuxième extrémité qui est fixée à proximité du rail 2 de manière à définir l'écartement maximal entre le rail 2 et le bras 6. La tige 9 est montée mobile par rapport à l'extrémité mobile de manière à autoriser un placement fixe du bras 6 par rapport au rail 2 selon différentes longueurs de bras 6 et selon différents angles par rapport à la direction verticale ZZ.

Le bâti 1 possède une platine de blocage 10 qui est montée à proximité du rail 2, par exemple la platine de blocage 10 est fixée au rail 2. De manière préférentielle, le lien relie l'extrémité mobile 6a et la platine de blocage 10 pour imposer la position du bras 6. Le lien et la platine de blocage 10 possèdent respectivement un premier bloqueur et un deuxième bloqueur qui sont destinés à coopérer pour fixer la deuxième extrémité du lien avec la platine de blocage 10.

Dans un mode de réalisation particulier, le lien est une tige 9 qui comporte une pluralité d'orifices traversants 11 et la platine de blocage 10 possède une pluralité d'orifices traversants 12. Un orifice traversant 11 de la tige 9 est fixé à un orifice traversant 12 de la platine de blocage 10 par un verrou ou un cadenas. Il est avantageux d'avoir plusieurs orifices traversants 11 dans la tige 9 et plusieurs orifices traversants 12 dans la platine de blocage 10 afin de trouver le meilleur couple d'orifices traversants qui correspond à la position du bras 6 en appui contre le cycle. Les deux trous traversants 11 et 12 sont traversés par le verrou ou le cadenas pour fixer l'écartement entre le rail 2 et le bras 6 la forme du cycle qui tient compte de la longueur et de la hauteur du cycle.

Dans une alternative de réalisation, le bâti 1 possède un pion amovible terminé paroi un trou traversant pour le passage d'un verrou ou d'un cadenas. Une fois le cycle installé sur la bande de roulement 2a, la longueur du bras 6 réglée et une fois le bras 6 réglé pour venir en appui contre le cycle ou pour limiter un déplacement vertical du cycle, on cherche à aligner deux des orifices traversants 11 et 12 et on introduit le pion pour empêcher le déplacement du bras 6 par rapport au rail 2. Lorsque le pion est installé, il est irrémédiablement fixé à la platine de blocage 10 par un verrou ou un cadenas qui passe à travers le trou traversant du pion. Dans ces modes de réalisation, le cycle est coincé dans l'antivol et la fixation entre le lien et la platine de blocage ne nécessite pas d'utiliser un cadenas de grande dimension. L'utilisateur peut arriver avec son cadenas/verrou de dimension modeste pour fermer l'antivol. Pour assurer un bon blocage du cycle, il est préférable que le bras soit en contact du cycle pour limiter autant que possible les déplacements verticaux. Cependant, un léger jeu est possible pour éviter de détériorer des équipements placés sur le cintre.

Dans une alternative de réalisation, la tige 9 possède un pion saillant et la platine de blocage possède une pluralité de trous traversants 12. Une fois le cycle installé entre le rail 2 et le bras 6 et une fois le bras 6 réglé pour venir en appui contre le cycle ou pour limiter un déplacement vertical du cycle, on cherche à faire passer le pion à travers un des trous traversants 12 pour fixer la position du bras 6 et ainsi coincer le cycle dans le bâti 1. Un montage inverse avec un pion monté saillant de la platine de blocage 10 et plusieurs trous 11 formés dans la tige 9 est possible.

L'utilisation d'un bras 6 de longueur ajustable permet de placer l'extrémité mobile 6a à proximité immédiate du cintre du cycle de sorte que le lien forme une deuxième butée de fin de course selon la direction longitudinale XX dans la direction opposée à la butée 4. Le cycle est alors contraint selon les directions XX et ZZ dans les deux sens opposés.

La tige 9 fixée d'une part au bras 6 et d'autre part à la platine de blocage 10 permet d'assurer une meilleure tenue mécanique du bras 6 contre les agressions mécaniques car le bras 6 est fixé à ses deux extrémités.

Dans la position de blocage destinée à coincer un cycle à l'intérieur du bâti 1, la tige 9 s'étend principalement verticalement ou exclusivement verticalement. La tige 9 est disposée à proximité immédiate du rail 2 de manière à former un obstacle à la progression du cycle selon la direction longitudinale en venant en appui contre le cintre du cycle. Par exemple, la tige 9 s'étend sensiblement dans le prolongement d'une des bordures 3 selon la direction longitudinale. Dans ce cas de figure, le cycle est inséré dans l'antivol en marche arrière, c'est-à-dire que la roue arrière du cycle est contre la butée 4.

En alternative ou en complément, le bras 6 est terminé par un obturateur 13 qui s'étend depuis l'extrémité du bras 6 en direction du rail 2, dans la position de blocage, de manière à former un obstacle au déplacement du cycle selon la direction longitudinale XX. Lorsque le cycle est installé dans la bande de roulement en marche avant, la selle du cycle vient en butée contre l'obturateur 13 et l'extrémité du bras 6 est maintenue en position au moyen de la tige 9.

Lorsque le cycle est installé en marche arrière, il est particulièrement avantageux d'éviter que le bras 6 vienne en appui contre le cintre et surtout contre les différents équipements qui sont installés contre le cintre. Cette problématique est particulièrement importante pour les cycles à assistance électrique dont une partie de l'électronique de commande est disposée sur le cintre. Il est alors avantageux de pourvoir le bras 6 avec un ressort 14 qui est destiné à prendre appui contre la potence. Le ressort 14 forme une liaison mécanique flexible entre le bras 6 et la potence ce qui permet d'ajuster la position du bras 6 par rapport à la position du cintre en appuyant sur le cycle pour compliquer un déplacement vertical. Le ressort 14 possède une dimension variable selon la direction ZZ. De manière privilégiée, le ressort 14 est inclus dans un tube 15 présentant une ou plusieurs échancrures, l'échancrure est destinée au moins au passage du tube de potence qui s'étend vers l'avant du cycle depuis le tube de direction. Le tube 15 rend plus difficile le déplacement du cycle à l'intérieur de l'antivol. Il est avantageux de monter le ressort 14 sur la partie mobile du bras 6 destinée à ajuster la longueur du bras 6. Le tube 15 et la tige 9 sont destinés à coincer le tube de potence et le cintre par rapport au bras 6.

Afin de faciliter le blocage du cycle à l'intérieur du bâti 1, il est avantageux de coincer une partie du cycle avec la platine de blocage 10. Il est particulièrement avantageux que la platine de blocage 10 définisse au moins un trou de blocage 16 destiné à recevoir une des pédales du cycle. Cette configuration est particulièrement avantageuse car la très grande majorité des cycles possède des roues qui ont un diamètre compris entre 26 et 29 pouces pour des cycles d'adulte.

L'axe de rotation du pédalier est généralement très proche de la roue arrière de sorte que la position de l'axe de pédalier évolue peu à l'intérieur du bâti 1 pour les différentes tailles et les différentes configurations de cycles. En outre, la longueur des manivelles est généralement adaptée à la taille du cadre de sorte que la très grande majorité des cycles possède une pédale qui est proche des bordures dans sa position la plus basse. En imposant, la position de l'extrémité de la roue arrière ou de la roue avant au moyen de la butée de fin de course 4, il est possible d'estimer la position spatiale d'une pédale à l'intérieur du bâti. La pédale étant une pièce mobile, il est possible de la déplacer pour mieux adapter sa position spatiale par rapport au trou de blocage 16. Une fois la pédale disposée dans le trou traversant additionnel, il est possible de la déplacer de manière à venir en appui contre la platine de blocage 10 ce qui complique un déplacement du cycle selon les directions verticale, longitudinale et transversale. L'axe de la pédale et la platine de blocage 10 forment un coincement particulièrement efficace car il fixe la position du cadre. La liaison mécanique entre les pédales et le cadre est une liaison mécanique particulièrement rigide afin d'avoir une bonne transmission des efforts de pédalage. Le blocage de la pédale dans la platine de blocage 10 fixe solidement la position du cadre dans le bâti.

De manière privilégiée, le trou de blocage 16 est courbé avec une forme concave lors d'une observation depuis la butée 4. La forme concave peut être un arc de cercle dont le centre est disposé entre la butée 4 et la platine de blocage 10 dans un plan horizontal à proximité des bordures 3. La courbure est choisie pour représenter l'arc de cercle réalisé par l'axe de rotation de la pédale avec une manivelle de longueur standard, par exemple 170mm. La largeur de la découpe dans la platine de blocage 10 permet de s'adapter aux variations dimensionnelles entre les roues, les longueurs de manivelles et la géométrie du cadre. La rotation de la pédale à l'intérieur du trou de blocage 16 permet faire venir la pédale en butée contre la platine de de blocage 10 et compliquer un déplacement du cycle.

Il est avantageux de monter la platine de blocage 10 de manière mobile en pivotement autour d'un arbre de pivotement 17 qui s'étend selon la direction longitudinale XX à proximité du rail 2. La mobilité de la platine de blocage 10 facilite l'installation du cycle puis l'insertion de la pédale à l'intérieur du trou de blocage 16. Cela permet de ne pas forcer sur les roues du cycle pour décaler la pédale avant de l'insérer dans le trou de blocage 16. Lorsque la platine de blocage 10 est montée à pivotement, il est particulièrement intéressant de fixer le lien à la platine de blocage 10. Une fois le lien fixé à la platine de blocage 10 et au bras 6, il n'est plus possible de faire pivoter la platine de blocage 10.

De manière avantageuse, le trou de blocage 16 est prolongé par une découpe sensiblement horizontale disposée dans la moitié inférieure de la découpe courbée. La découpe horizontale est apte à recevoir une pédale et limiter un déplacement vers le haut du cycle, la découpe horizontale offre une plus grande liberté dans le blocage d'une pédale.

Préférentiellement, la tige 9 est montée à pivotement par rapport à l'extrémité 6a du bras 6.

Dans un mode de réalisation avantageux, une boite 18 est fixée au poteau 8 et elle définit un volume apte à recevoir un casque. La boite 18 est refermée au moyen du bras 6 de sorte que la boite 18 est irrémédiablement fermée tant que le bras 6 est coincé dans la position de blocage qui coince le cycle à l'intérieur du bâti, c'est-à-dire tant que le lien est fixé d'un part au bras 6 et d'autre part au rail 2 ou à la platine de blocage 10. Pour avoir une fermeture efficace de la boite 18, il avantageux d'avoir des bavettes qui s'étendent depuis le bras 6 face à la boite 18 selon la direction transversale YY. Éventuellement une bavette s'étend face à la boite 18 selon la direction longitudinale XX du côté opposé à la butée 4. L'utilisation des bavettes permet d'avoir une plus grande amplitude de pivotement du bras 6 sans risquer d'avoir accès à l'intérieure de la boite 18.

Il est également possible de prévoir deux bavettes qui s'étendent depuis le bras 6 en direction du rail 2, les deux bavettes étant disposées à proximité de la position destinée à être prise par la selle et en vis-à-vis selon la direction transversale YY. Les bavettes limitent le déplacement de la selle selon la direction transversale YY, lorsque le bas 6 est fixé au rail 2 ou à la platine de blocage 10 par le lien.

Dans un mode de réalisation préférentiel, le bâti 1 possède un ou plusieurs bras additionnels articulés qui sont montés mobiles de manière à venir en butée contre le cadre du cycle, notamment contre le tube diagonal ou contre le tube de selle qui sont les positions conventionnelles des batteries des cycles à assistance électrique. Les bras additionnels articulés appuient contre les batteries ce qui a pour effet d'empêcher ou de rendre plus difficile le vol de ces équipements. Les bras additionnels articulés peuvent être montés sur le poteau 8, sur la platine de blocage 10, sur la tige 9 ou sur le bras 6.

Dans une configuration préférentielle, l'antivol possède un ou plusieurs capteurs configurés pour déterminer si l'antivol contient ou un non un cycle et un ou plusieurs capteurs configurés pour déterminer la connexion mécanique entre la tige 9 et la platine de blocage 10. Les capteurs sont reliés à un circuit électronique de commande qui est configuré pour émettre un signal lorsque le circuit électronique de commande détermine que l'antivol ne supporte pas de cycle et que le bras est fixé à la platine de blocage 10, c'est-à-dire dans la configuration illustrée à la figure 1. Dans ce cas de figure, l'antivol est en position fermé sans vélo ce qui peut correspondre à une utilisation frauduleuse de l'antivol si ce dernier est maintenu en position fermée par un cadenas. Il est possible de prévoir que la tige 9 soit configurée pour ne pas toucher la platine de blocage 10 ou éventuellement le rail 2 ou la bordure 3 en l'absence de cycle et lorsque ces éléments sont reliés électriquement. L'antivol étant majoritairement réalisé en matériaux métallique et les cadenas étant également en matériau métallique, un test de continuité électrique entre la tige 9 ou l'un du rail 2, de la bordure 3 ou de la platine de blocage 10 permet de discriminer rapidement sur un cadenas est présent ou non entre la tige 9 et la platine de blocage 10. En cas de continuité électrique, il doit exister un cadenas fixé à la tige 9 et à une autre pièce de l'antivol. La réception d'un tel signal peut entrainer une intervention pour libérer l'antivol.

Le capteur installé dans le rail 2 peut être une jauge de contrainte qui mesure la déformation du rail 2 lié à l'installation d'un cycle. Il est possible de faire circuler un courant faible pendante une courte durée et à un intervalle régulier, par exemple 1sec toutes les 10min, pour détecter une fermeture non appropriée de l'antivol.

Il est également possible que la détection de l'installation d'un cycle dans l'antivol génère un minuteur. Une fois le temps écoulé, un signal d'intervention peut être émis car il est considéré que le cycle reste trop longtemps dans l'antivol ce qui correspond à une utilisation non désirée. Par exemple, le minuteur peut être réglé sur une durée de 24h. La durée peut varier selon l'emplacement de l'antivol.

Afin de pouvoir faire fonctionner le circuit électronique, il est avantageux que l'antivol possède une batterie et plus préférentiellement que cette batterie soit associée à un panneau photovoltaïque qui alimente la batterie. En alternative ou en complément, la batterie peut être associée ou remplacée par une éolienne. Il est préférable que l'antivol soit autonome en énergie afin de pouvoir installer rapidement l'antivol et de pouvoir le déplacer aisément en fonction des évolutions des besoins.

L'utilisation d'une alimentation électrique permet de prévoir un dispositif d'éclairage de l'antivol afin de faciliter son utilisation la nuit.

Afin d'éviter la détérioration de l'antivol, le poteau peut être accouplé à un mat qui supporte une caméra de surveillance. Le mat peut être utilisé pour supporter le panneau photovoltaïque ou l'éolienne.

L'antivol possède une largeur réduite selon la direction transversale YY. De manière préférentielle, l'antivol possède une largeur qui est inférieure à la largeur du cycle. Cela permet d'installer plusieurs antivols dans un encombrement réduit. A titre d'exemple, il est possible d'installer entre six et huit antivols dans un encombrement correspondant à une place de stationnement d'une voiture (environ 12,5m²) selon le type de cycle prévu. Les antivols peuvent être installés alignés les uns derrière les autres selon la direction transversale YY. Préférentiellement, les antivols sont disposés tête-bêche afin de faciliter leur utilisation avec des cycles possédant des cintres larges.

Il est également avantageux de disposer un ensemble d'antivols qui définit deux rangées adjacentes d'antivols. Chaque rangée est formée par une pluralité d'antivols alignés selon la direction XX et disposés les uns derrière les autres selon la direction YY. Les antivols sont disposés alternativement entre la première rangée et la deuxième rangée. Les antivols s'étendent selon des sens opposés entre la première rangée et la deuxième rangée. Les butées 4 de fin de course et/ou les poteaux 8 sont préférentiellement disposés alignés selon la direction transversale YY.

Lorsque plusieurs antivols sont installés les uns à côté des autres, il est avantageux de fixer les multiples antivols à un support afin de renforcer la tenue mécanique de l'ensemble. De manière préférentielle, le support est surmonté par une surface de communication qui peut intégrer un plan des alentours de l'antivols ou des informations.

## Revendications

1. Dispositif antivol de parking pour un cycle comprenant au moins des roues avant et arrière, un cadre, une selle et une paire de pédales, le dispositif antivol comprenant un bâti (1) destiné à être fixé à un ancrage, le bâti (1) définissant un logement destiné à recevoir le cycle, le bâti (1) possédant :
- un rail (2) s'étendant selon une direction longitudinale (XX) et possédant une zone de roulement (2a) destinée à supporter les roues avant et arrière du cycle, le rail (2) comportant au moins deux bordures (3) montées en saillie de la zone de roulement (2a) pour limiter un déplacement des roues avant et arrière hors de la zone de roulement (2a) selon une direction transversale (YY) perpendiculaire à la direction longitudinale (XX) ;
- une butée (4) de fin de course montée à une extrémité du rail (2) et destinée à bloquer une progression du cycle le long du rail (2) selon la direction longitudinale (XX) ;
- un bras (6) monté mobile par rapport au rail (2) pour se rapprocher ou s'éloigner du rail (2) selon une direction verticale (ZZ), dans une position de blocage le bras (6) s'étend principalement selon la direction longitudinale (XX) et est en vis-à-vis du rail (2) selon la direction verticale (ZZ), la position de blocage étant destinée à bloquer un déplacement vertical du cycle disposé entre le rail (2) et le bras (6) ;
- une platine de blocage (10) ;
- une tige (9) destinée à être fixée d'une part à une extrémité mobile du bras (6) et d'autre part à la platine de blocage (10) pour imposer un écartement entre le rail (2) et le bras (6) et maintenir le bras (6) dans la position de blocage ;
**caractérisé en ce que** la platine de blocage (10) définit au moins un trou de blocage (16) qui est traversant et apte à être traversé par une des pédales lorsque le cycle est posé sur la zone de roulement (2a), le au moins un trou de blocage (16) formant une butée destinée à empêcher au moins un déplacement vertical du cycle lorsque la pédale est disposé dans le au moins un trou de blocage (16).

2. Dispositif antivol de parking pour un cycle selon la revendication 1 dans lequel la platine de blocage (10) est montée mobile à pivotement autour d'un arbre de pivotement (17) s'étendant selon la direction longitudinale (XX), la fixation de la platine de blocage (10) à la tige (9) empêchant le pivotement de la platine de blocage (10).

3. Dispositif antivol de parking pour un cycle selon l'une des revendications 1 et 2 dans lequel le au moins un trou de blocage (16) est courbe de manière concave dans une observation depuis la butée (4).

4. Dispositif antivol de parking pour un cycle selon l'une quelconque des revendications 1 à 3 dans lequel la platine de blocage (10) définit une pluralité de trous traversants (10) ou une pluralité de pions destinée à coopérer avec la tige (9) pour définir plusieurs valeurs d'écartement entre le rail (2) et le bras (6).

5. Dispositif antivol de parking pour un cycle selon l'une quelconque des revendications 1 à 4 dans lequel le bras (6) possède une première partie montée mobile par rapport à une deuxième partie pour ajuster la longueur du bras selon la direction longitudinale (XX), la tige (9) étant fixée à la première partie et dans lequel un ressort (14) est fixé à la première partie, le ressort (14) étant destiné à prendre appui sur une potence du cycle pour éviter un contact direct entre la première partie et le cycle.

6. Dispositif antivol de parking pour un cycle selon la revendication 5 dans lequel un tube (15) est fixé à la première partie autour du ressort (14) et dans lequel le tube (15) définit au moins une échancrure destinée au passage d'un tube de potence ou d'un cintre du cycle.

7. Procédé de coincement d'un cycle comportant les étapes suivantes :
- fournir un antivol de parking pour cycle selon l'une quelconque des revendications précédentes ;
- installer le cycle sur la zone de roulement (2a) d'un rail (2), la roue arrière étant en appui contre une butée de fin de course selon la direction longitudinale (XX), les roues avant et arrière du cycle étant disposées entre des bordures (3) bloquant un déplacement des roues avant et arrière selon une direction transversale (YY) perpendiculaire à la direction longitudinale ;
- installer une pédale du cycle dans un trou de blocage (16) de la platine de blocage pour bloquer un déplacement du cycle selon la direction verticale et selon la direction longitudinale ;
- ajuster l'inclinaison du bras (6) pour empêcher un déplacement vertical du cycle de sorte que les roues avant et arrière soient toujours entre les bordures (3) ;
- accrocher la tige (9) à la platine de blocage (10), la tige (9) étant fixée au bras (6) de manière à fixer l'écartement entre le bras (6) et le rail (2).

## Patentansprüche

1. Diebstahlsicherung einer Parkvorrichtung für ein Fahrrad, das mindestens ein Vorder- und ein Hinterrad, einen Rahmen, einen Sattel und ein Pedalpaar umfasst, wobei die Diebstahlsicherung ein Gestell (1) zur Befestigung an einer Verankerung umfasst, wobei das Gestell (1) eine Aufnahme definiert, die dazu bestimmt ist, das Fahrrad aufzunehmen, wobei das Gestell (1) aufweist:
- eine Schiene (2), die sich in einer Längsrichtung (XX) erstreckt und einen Rollbereich (2a) aufweist, der dazu bestimmt ist, das Vorder- und das Hinterrad des Fahrrads zu tragen, wobei die Schiene (2) mindestens zwei Ränder (3) umfasst, die vom Rollbereich (2a) vorspringend angebracht sind, um eine Bewegung des Vorder- und des Hinterrads in einer Querrichtung (YY) senkrecht zur Längsrichtung (XX) aus dem Rollbereich (2a) heraus zu begrenzen;
- einen Endanschlag (4), der an einem Ende der Schiene (2) angebracht und dazu bestimmt ist, eine Fortbewegung des Fahrrads entlang der Schiene (2) in der Längsrichtung (XX) zu blockieren;
- einen Arm (6), der in Bezug auf die Schiene (2) beweglich angebracht ist, um sich in einer vertikalen Richtung (ZZ) der Schiene (2) zu nähern oder davon zu entfernen, wobei der Arm (6) sich in einer Blockierstellung hauptsächlich in der Längsrichtung (XX) erstreckt und der Schiene (2) in der vertikalen Richtung (ZZ) gegenüberliegt, wobei die Blockierstellung dazu bestimmt ist, eine vertikale Bewegung des zwischen der Schiene (2) und dem Arm (6) angeordneten Fahrrads zu blockieren;
- eine Blockierplatte (10);
- eine Stange (9), die dazu bestimmt ist, einerseits an einem beweglichen Ende des Arms (6) und andererseits an der Blockierplatte (10) befestigt zu sein, um einen Abstand zwischen der Schiene (2) und dem Arm (6) zu erzwingen und den Arm (6) in der Blockierstellung zu halten;
**dadurch gekennzeichnet, dass** die Blockierplatte (10) mindestens ein Blockierloch (16) definiert, das durchgehend und geeignet ist, von einem der Pedale durchquert zu werden, wenn das Fahrrad auf dem Rollbereich (2a) steht, wobei das mindestens eine Blockierloch (16) einen Anschlag bildet, der dazu bestimmt ist, mindestens eine vertikale Bewegung des Fahrrads zu verhindern, wenn das Pedal in dem mindestens einen Blockierloch (16) angeordnet ist.

2. Diebstahlsicherung einer Parkvorrichtung für ein Fahrrad nach Anspruch 1, wobei die Blockierplatte (10) um eine Schwenkwelle (17) herum schwenkbar gelagert ist, die sich in der Längsrichtung (XX) erstreckt, wobei die Befestigung der Blockierplatte (10) an der Stange (9) die Schwenkung der Blockierplatte (10) verhindert.

3. Diebstahlsicherung einer Parkvorrichtung für ein Fahrrad nach einem der Ansprüche 1 und 2, wobei das mindestens eine Blockierloch (16) vom Anschlag (4) aus gesehen konkav gekrümmt ist.

4. Diebstahlsicherung einer Parkvorrichtung für ein Fahrrad nach einem der Ansprüche 1 bis 3, wobei die Blockierplatte (10) eine Vielzahl von Durchgangslöchern (10) oder eine Vielzahl von Stiften definiert, die dazu bestimmt sind, mit der Stange (9) zusammenzuwirken, um mehrere Abstandswerte zwischen der Schiene (2) und dem Arm (6) zu definieren.

5. Diebstahlsicherung einer Parkvorrichtung für ein Fahrrad nach einem der Ansprüche 1 bis 4, wobei der Arm (6) einen ersten Abschnitt aufweist, der in Bezug auf einen zweiten Abschnitt beweglich angebracht ist, um die Länge des Arms in der Längsrichtung (XX) einzustellen, wobei die Stange (9) am ersten Abschnitt befestigt ist, und wobei am ersten Abschnitt eine Feder (14) befestigt ist, wobei die Feder (14) dazu bestimmt ist, an einem Lenkervorbau des Fahrrads zur Auflage zu kommen, um einen direkten Kontakt zwischen dem ersten Abschnitt und dem Fahrrad zu vermeiden.

6. Diebstahlsicherung einer Parkvorrichtung für ein Fahrrad nach Anspruch 5, wobei am ersten Abschnitt ein Rohr (15) um die Feder (14) herum befestigt ist, und wobei das Rohr (15) mindestens eine Einbuchtung definiert, die für den Durchgang eines Lenkervorbau- oder Lenkerbügelrohrs des Fahrrads bestimmt ist.

7. Verfahren zum Klemmen eines Fahrrads, umfassend die folgenden Schritte:
- Bereitstellen einer Diebstahlsicherung einer Parkvorrichtung für ein Fahrrad nach einem der vorherigen Ansprüche;
- Installieren des Fahrrads auf dem Rollbereich (2a) einer Schiene (2), wobei das Hinterrad in der Längsrichtung (XX) gegen einen Endanschlag anliegt, wobei das Vorder- und das Hinterrad des Fahrrads zwischen Rändern (3) angeordnet sind, die eine Bewegung des Vorder- und des Hinterrads in einer Querrichtung (YY) senkrecht zur Längsrichtung blockieren;
- Installieren eines Pedals des Fahrrads in einem Blockierloch (16) der Blockierplatte, um eine Bewegung des Fahrrads in der vertikalen Richtung und in der Längsrichtung zu blockieren;
- Einstellen der Neigung des Arms (6), um eine vertikale Bewegung des Fahrrads zu verhindern, damit das Vorder- und das Hinterrad sich stets zwischen den Kanten (3) befinden;
- Anbringen der Stange (9) an der Blockierplatte (10), wobei die Stange (9) an dem Arm (6) befestigt ist, um den Abstand zwischen der Stange (6) und der Schiene (2) festzulegen.

## Claims

1. Parking anti-theft device for a bicycle comprising at least front and rear wheels, a frame, a saddle, and a pair of pedals, the anti-theft device comprising a frame (1) intended to be fixed to an anchor, the frame (1) defining a housing intended to receive the bicycle, the frame (1) having:
- a rail (2) extending in a longitudinal direction (XX) and having a rolling area (2a) for supporting the front and rear wheels of the bicycle, the rail (2) having at least two edges (3) projecting from the rolling area (2a) to limit a movement of the front and rear wheels out of the rolling area (2a) in a transverse direction (YY) perpendicular to the longitudinal direction (XX);
- an end stop (4) mounted at one end of the rail (2) and designed to block a progress of the bicycle along the rail (2) in the longitudinal direction (XX);
- an arm (6) mounted so as to be movable relative to the rail (2) in order to move closer to or further away from the rail (2) in a vertical direction (ZZ), in a locking position the arm (6) extends mainly in the longitudinal direction (XX) and faces the rail (2) in the vertical direction (ZZ), the locking position being intended to block a vertical movement of the bicycle arranged between the rail (2) and the arm (6);
- a locking plate (10);
- a rod (9) designed to be attached on one side to a movable end of the arm (6) and on the other side to the locking plate (10) to impose a spacing between the rail (2) and the arm (6) and hold the arm (6) in the locking position;
**characterized in that** the locking plate (10) defines at least one locking hole (16) which is through and capable of being passed through by one of the pedals when the bicycle is placed on the rolling surface (2a), the at least one locking hole (16) forming a stop designed to prevent at least one vertical movement of the bicycle when the pedal is positioned in the at least one locking hole (16).

2. Parking anti-theft device for a bicycle according to claim 1, wherein the locking plate (10) is mounted so as to be pivotable about a pivot shaft (17) extending in the longitudinal direction (XX), the attachment of the locking plate (10) to the rod (9) preventing the locking plate (10) from pivoting.

3. Parking anti-theft device for a bicycle according to one of claims 1 and 2, wherein the at least one locking hole (16) is concave when viewed from the stop (4).

4. Parking anti-theft device for a bicycle according to any of claims 1 to 3, wherein the locking plate (10) defines a plurality of through holes (10) or a plurality of pins intended to cooperate with the rod (9) to define several spacing values between the rail (2) and the arm (6).

5. Parking anti-theft device for a bicycle according to any of claims 1 to 4, wherein the arm (6) has a first part mounted movably relative to a second part to adjust the length of the bar in the longitudinal direction (XX), the rod (9) being fixed to the first part and wherein a spring (14) is fixed to the first part, the spring (14) being designed to bear against a bracket on the bicycle to prevent direct contact between the first part and the bicycle.

6. Parking anti-theft device for a bicycle according to claim 5, wherein a tube (15) is attached to the first part around the spring (14) and wherein the tube (15) defines at least one notch for the passage of a stem tube or a handlebar of the bicycle.

7. Method for securing a bicycle, comprising the following steps:
- providing an anti-theft device for a bicycle according to any of the preceding claims;
- installing the bicycle on the rolling surface (2a) of a rail (2), with the rear wheel resting against an end stop in the longitudinal direction (XX), the front and rear wheels of the bicycle being positioned between the edges (3) for preventing the front and rear wheels from moving in a transverse direction (YY) perpendicular to the longitudinal direction;
- installing a pedal of the cycle in a locking hole (16) of the locking plate to lock a movement of the cycle in the vertical direction and in the longitudinal direction :
- adjusting the angle of the arm (6) to prevent vertical movement of the bicycle so that the front and rear wheels remain between the edges (3) ;
- attaching the rod (9) to the locking plate (10), the rod (9) being fixed to the arm (6) so as to fix the distance between the arm (6) and the rail (2).
